# EUROPÄISCHE PATENTSCHRIFT

(11) **EP 0 743 135 B1**
(45) Veröffentlichungstag und Bekanntmachung des Hinweises auf die Patenterteilung: **14.07.1999**
(21) Anmeldenummer: 96105995.3
(22) Anmeldetag: 17.04.1996
(51) Int. Cl.: B23K 37/047, B23K 26/00, B23K 11/06

(54) **Verfahren zum Verbinden von zwei Werkstücken**
Process for bonding two workpieces
Procédé de jonction de deux pièces

(30) Priorität: 15.05.1995 CH 141095
(43) Veröffentlichungstag der Anmeldung: 20.11.1996
(73) Patentinhaber: ELPATRONIC AG, 8962 Bergdietikon (CH)
(72) Erfinder: Aebersold, Hans, 8903 Birmensdorf (CH); Gross, Norbert, CH-8422 Pfungen (CH); Urech, Werner, 8434 Kaiserstuhl (CH)

(56) Entgegenhaltungen:
- EP-A- 0 438 615
- EP-A- 0 565 088
- EP-A- 0 565 846
- US-A- 4 811 936
- US-A- 5 060 840

## Beschreibung

Die Erfindung betrifft ein Verfahren zum Verbinden von zwei Werkstücken durch Schweissen, wobei die Werkstücke durch eine Zuführeinrichtung auf Spanntische gebracht und durch eine Schweissnaht miteinander verbunden werden, sowie eine Vorrichtung hierfür.

Zum Verbinden von zwei Werkstücken, insbesondere bei der Herstellung von Karosserieteilen im Automobilbau sind verschiedene Schweissverfahren bekannt. Zu erwähnen ist hier vor allem das Quetschnaht-Widerstandsrollenschweissen und das Laserschweissen. EP-A 565 088 zeigt eine Schweissanlage für die Verschweissung solcher Karrosserieteile.

Bei allen Schweissverfahren wird neben der Güte der Schweissnaht besonders auf die Wirtschaftlichkeit Wert gelegt. Die Werkstücke sollen möglichst ohne Todzeiten verschweisst werden, worunter verstanden wird, dass die Schweisstation möglichst ununterbrochen im Betrieb ist und so die maximal mögliche Ausbringung realisiert. Weiter soll die Aufspanneinrichtung einfachst ausgeführt sein, um Betriebskosten zu senken. Dabei ist es insbesondere beim Laserschweissen unabdingbar, dass während dem Schweissvorgang selbst die Werkstücke möglichst festgelegt werden, damit sie nicht verrutschen und eine Stossfuge zwischen den beiden Werkstücken geöffnet wird. Der Eingangs genannte Stand der Technik zeigt nun eine Schweissanlage, bei welcher die zu verschweissenden Bleche in komplizierter Art aufgespannt und über verfahrbare Tische zur Schweisstation gebracht werden, was zB eine aufwendige Maschinensteuerung erheischt.

Der vorliegenden Erfindung liegt die Aufgabe zugrunde, ein Verfahren und eine Vorrichtung der o.g. Art zu entwickeln, mittels der ein Verbinden von zwei Werkstücken auf wirtschaftliche Weise in einer Maschine mit einfacher Mechanik, möglich wird.

Zur Lösung dieser Aufgabe führt, dass die Werkstücke in der Zuführeinrichtung positioniert werden, die Zuführeinrichtung sodann zwischen die Spanntische einfährt und die Werkstücke ablegt und beim Einfahren gleichzeitig die durch die Schweissnaht verbundenen Werkstücke des vorangegangenen Zyklus ausschiebt.

Diese Anordnung hat den Vorteil, dass während des Schweissvorganges die Werkstücke absolut ruhig liegen und deshalb die Stossfuge oder ein Überlappbereich nicht verändert wird. Diese Anordnung erlaubt die Ausgestaltung von Spanntischen mit Klemm- und Halteelementen, welche Werkstücke absolut gesichert festlegen.

Die Schweisseinrichtung, im vorliegenden Fall ein Laser, sendet einen Laserstrahl aus, der abgelenkt und über zumindest eine Laserfokussiereinheit auf die Stossfuge gerichtet wird. Zur Kontrolle des Laserstrahls wird es sich als günstig erweisen, wenn unterhalb der Werkstücke, d.h. zwischen den Spanntischen ein Sensor mit dem Laserstrahl läuft, mittels dem die Position des Laserstrahls exakt ermittelt wird. Hierdurch lässt sich bestimmen, ob der Laserstrahl im Bereich der Stossfuge seine Schweisstätigkeit durchführt.

Wesentlich ist die automatisch arbeitende Zuführ-einrichtung, welche mehrere Funktionen wahrnimmt. Beispielsweise kann sie aus einer Spannzange bestehen, die einen Horizontalschlitz aufweist, in den die Werkstücke eingeschoben und in dem die Werkstücke klemmend gehalten werden. Hierdurch übernimmt sie eine Positionierung der Werkstücke.

Sobald die Spannzange zwei Werkstücke aufgenommen hat, fährt sie in die Schweissstation und übergibt diese Werkstücke an die Spanntische. Dabei kann von Elementen an den Spanntischen ein Druck auf die äusseren Randkanten der Werkstücke quer zur Schweissrichtung aufgebracht werden, so dass sich vor dem Festlegen der Werkstücke auf den Spanntischen die Stossfuge möglichst verkleinert. Dies ist vor allem beim Laserschweissen ein erheblicher Vorteil.

Zu einer Verbesserung der Stossfuge führt auch eine Profilierrolle, wie sie in der EP-A-565 846 beschrieben ist. Auch diese Profilierrolle kann an der Zuführeinrichtung vorgesehen sein, so dass die Profilierung beim Herausfahren der Zuführeinrichtung durchgeführt wird. Anstelle oder zusätzlich zu der Profilierrolle können auch Glättrollen an der Zuführeinrichtung angeordnet sein, mit denen der Bereich einer Schweissnaht vorgeglättet werden kann.

Auf die Schweissstation folgt eine Abtransporteinrichtung. Dabei werden die miteinander verbundenen Werkstück durch die Zuführeinrichtung mit neu in die Schweissstation einzubringenden Werkstücken ausgestossen und abtransportiert.

Um die gesamte Vorrichtung noch effizienter auszugestalten, befindet sich jenseits der Abtransporteinrichtung eine weitere Schweissstation mit einer weiteren Zuführeinrichtung und einer weiteren Laserfokussiereinheit. Beide werden bevorzugt vom gleichen Laser versorgt. Hierdurch arbeitet die gesamte Vorrichtung wesentlich wirtschaftlicher, da die gemeinsame Laserquelle zyklisch auf zwei Schweissstationen umgeschaltet werden kann. Dies geschieht durch entsprechende Ablenkeinrichtungen, wie beispielsweise geeignete Spiegel. Möglich ist auch eine parallele Anordnung von jeweils zwei Schweissstationen mit Zuführeinrichtungen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht einer erfindungsgemässen Vorrichtung zum Verbinden von zwei Werkstücken;
Figur 2 eine Draufsicht auf die Vorrichtung gemäss Figur 1.

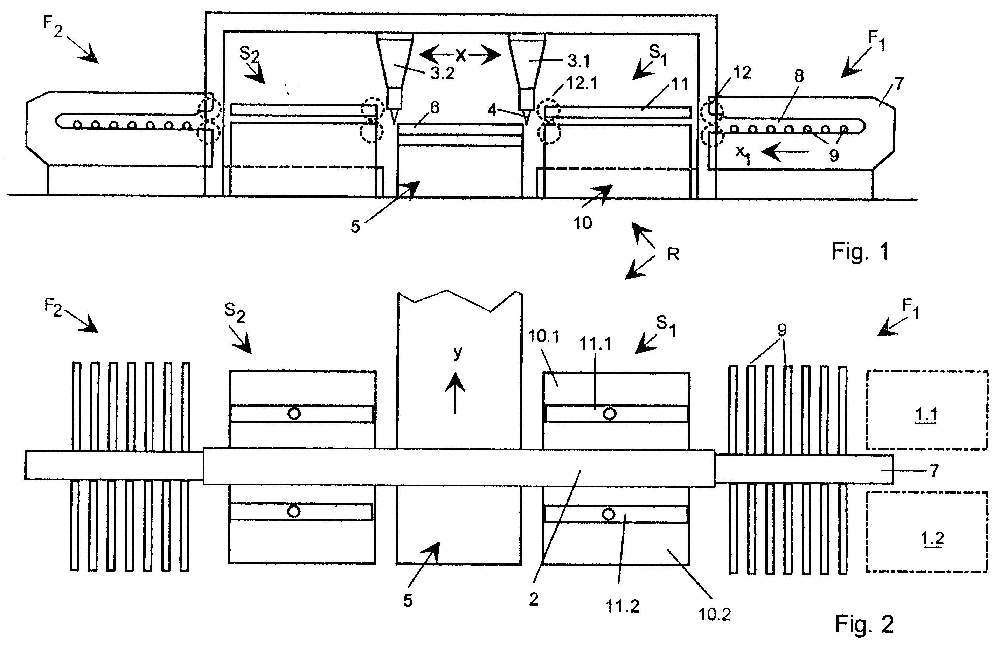

In einer erfindungsgemässen Vorrichtung R sollen zwei Werkstücke 1.1 und 1.2 (siehe Figur 2) durch Laserschweissen miteinander verbunden werden. Dabei weist die Vorrichtung R beidseits eines Portals 2 jeweils eine Zuführeinrichtung F₁ und F₂ und innerhalb des Portals jeweils eine Schweissstation S₁ und S₂ auf. Die Schweissung selbst erfolgt mittels jeweils einer Laserfokusiereinheit 3.1 und 3.2, die einen Laserstrahl 4 auf eine Stossfuge zwischen den zwei Werkstücken 1.1 und 1.2 richtet. Jede Laserfokussiereinheit 3.1 bzw. 3.2 ist am Portal 2 entlang des Doppelpfeiles x bewegbar und wird von einem nicht näher gezeigten, in der Regel ortsfesten Laser versorgt.

Zwischen den beiden Schweissstationen S₁ und S₂ ist eine Abtransporteinrichtung 5 vorgesehen, mittels der miteinander zu einer Platine verschweisste Werkstücke 1.1 und 1.2 in Richtung y abtransportiert werden. Beispiels-weise kann die Abtransporteinrichtung 5 eine entsprechende Rollenbahn 6 aufweisen, wie dies in Figur 1 angedeutet ist.

Da die Zuführeinrichtungen F₁ und F₂ sowie die Schweiss-station S₁ und S₂ identisch ausgebildet sind, wird nachfolgend nur ein Beispiel beschrieben.

Die Zuführeinrichtung F weist eine Spannzange 7 auf, die in Richtung x₁ verfahrbar angeordnet ist. Die Spannzange 7 besitzt einen Horizontalschlitz 8, an den sich beidseits Ablagerollen 9 anschliessen. Die Werkstücke 1.1 und 1.2 werden auf diese Ablagerollen 9 gelegt und durch ein beliebiges Fördermittel gegeneinander in den Horizontalschlitz 8 bewegt. In dem Horizontalschlitz 8 werden sie dann klemmend gehalten, wobei hierfür beliebige Klemmelemente vorgesehen sind.

Danach erfolgt ein Verfahren der Spannzange 7 in die Schweissstation S zwischen zwei Spanntische 10. Die Ablagerollen 9 verbleiben dabei in ihrer Position ausserhalb des Portals 2.

Die Spannzange 7 legt nun die Werkstücke 1.1 und 1.2 auf den Spanntischen 10 ab, wobei die Werkstücke 1.1 und 1.2 jeweils zwischen dem Spanntisch 10 und einer Druckplatte 11.1 bzw. 11.2 gehalten werden. Diese Druckplatte 11 wird mit einem beliebigen, hydraulischen, pneumatischen oder mechanischen Druck beaufschlagt, so dass die Werkstücke 1.1 und 1.2 weitest möglich fixiert sind.

Nunmehr wird der Druck auf die Werkstücke 1.1 und 1.2 im Horizontalschlitz 8 aufgehoben und die Spannzange 7 entgegen der Richtung X₁ aus der Schweissstation S bewegt. Dabei wird eine nicht näher gezeigte Stossfuge zwischen den beiden Werkstücken 1.1 und 1.2 freigegeben, entlang der jetzt der Laserstrahl 4 geführt wird, so dass eine Schweissnaht und damit eine Verbindung der beiden Werkstücke entsteht.

Der Verbesserung der Stossfuge, d.h., insbesondere der Verringerung der Stossfugenbreite dienen Profilrollen 12, die nahe der Stossfuge zwischen den beiden Werkstücken 1.1 und 1.2 ein oder beidseitig eine Nut od.dgl. Profil erzeugen, wie dies in der EP-A-565 846 beschrieben ist. Im vorliegenden Ausführungsbeispiel können derartige Profilrollen 12 bzw. 12.1 an der Spannzange 7 oder aber dem Laser 3 vorlaufend angeordnet sein, um die Profilierung zu erzeugen, wenn die Spannzange 7 die Schweissstation (S) verlässt. Alternativ dazu können die Profilrollen auch dem Laser 3 vorlaufend angeordnet sein.

Während dem Schweissvorgang wird die Zuführeinrichtung F wieder mit Werkstücken beladen, die dann beim Einfahren der Zuführeinrichtung F in die Schweissstation S die miteinander verschweissten Werkstücke aus der Schweiss-station S auf die Abtransporteinrichtung 5 ausschieben.

Während dieses Vorgangs ist der Laserstrahl durch eine andere Fokussiereinheit auf ein anderes Paar von Werkstücken in der zweiten Schweissstation ausgerichtet. Der Laserschweissvorgang wird nun in der zweiten Schweissstation ausgeübt.

## Patentansprüche

1. Verfahren zum Verbinden von zwei Werkstücken (1.1, 1.2) durch Schweissen, wobei die Werkstücke (1.1, 1.2) durch eine Zuführeinrichtung (F) auf Spanntische (10.1, 10.2) gebracht und durch eine Schweissnaht miteinander verbunden werden,
dadurch gekennzeichnet,
dass die Werkstücke (1.1, 1.2) in der Zuführeinrichtung (F) positioniert werden, die Zuführeinrichtung (F) sodann zwischen die Spanntische (10.1, 10.2) einfährt und die Werkstücke (1.1, 1.2) ablegt und beim Einfahren gleichzeitig die durch die Schweissnaht verbundenen Werkstücke (1.1, 1.2) des vorangegangenen Zyklus ausschiebt.

2. Verfahren nach Anspruch 1, dadurch gekennzeichnet, dass die Zuführeinrichtung (F) mit klemmend gehaltenen Werkstücken (1.1, 1.2) zwischen die Spanntische (10.1, 10.2) einfährt, die Werkstücke (1.1, 1.2) auf die Spanntische (10.1, 10.2) ablegt und beim Ausfahren aus den Spanntischen (10.1, 10.2) nahe der zu erzeugenden Schweissnaht eine Profilierung erzeugt.

3. Verfahren nach Anspruch 1 oder 2, dadurch gekennzeichnet, dass die Zuführeinrichtung (F) beim Ausfahren aus den Spanntischen (10.1, 10.2) den Bereich der Schweissnaht glättet.

4. Vorrichtung zur Ausführung des Verfahrens nach Anspruch 1, mit einer in einer Schweissstation (S) der eine Zuführeinrichtung (F) für die Werkstücke (1.1, 1.2) sowie eine Abtransporteinrichtung (5) zugeordnet ist, dadurch gekennzeichnet, dass die Zuführeinrichtung (F) eine Spannzange (7) mit einem Schlitz (8) aufweist, in dem die Werkstücke (1.1, 1.2) festgelegt sind, und ausgebildet ist, verschweisste Werkstücke von der Schweisstation (S) in die Abtransporteinrichtung (5) auszustossen .

5. Vorrichtung nach Anspruch 4, dadurch gekennzeichnet, dass die Spannzange (7) in die Schweissstation (S) verfahrbar ist.

6. Vorrichtung nach Anspruch 4 oder 5, dadurch gekennzeichnet, dass der Spannzange (7) zumindest eine Profilierrolle (12) zugeordnet ist.

7. Vorrichtung nach einem der Ansprüche 4 bis 6, dadurch gekennzeichnet, dass die Spannzange (7) Glättrollen aufweist.

8. Vorrichtung nach einem der Ansprüche 4 bis 7, dadurch gekennzeichnet, dass beidseits des Schlitzes (8) Ablagerollen (9) für die Werkstücke (1.1, 1.2) vorgesehen sind.

9. Vorrichtung nach Anspruch 8, dadurch gekennzeichnet, dass jenseits der Abtransporteinrichtung (5) eine weitere Schweissstation (S₁, S₂) mit einer Schweisseinrichtung (3.1, 3.2) und eine weitere Zuführeinrichtung (F₁, F₂) anschliesst.

10. Vorrichtung nach Anspruch 9, dadurch gekennzeichnet, dass parallel zur Schweissstation (S) und zur Zuführeinrichtung (F) eine weitere Schweissstation mit Zuführeinrichtung vorgesehen ist.

## Claims

1. Method for joining two workpieces (1.1, 1.2) together by welding, in which the workpieces (1.1, 1.2) are placed on clamping tables (10.1, 10.2) by a feed unit (F) and are joined together by a welded seam,
characterized in that
the workpieces (1.1, 1.2) are positioned in the feed unit (F), and the feed unit (F) is then traversed in between the clamping tables (10.1, 10.2) and deposits the workpieces (1.1, 1.2) and, upon being traversed in, simultaneously expels the workpieces (1.1, 1.2) joined together by the welded seam in the preceding cycle.

2. Method according to Claim 1, characterized in that the feed unit (F) together with gripped workpieces (1.1, 1.2) is traversed in between the clamping tables (10.1, 10.2) and deposits the workpieces (1.1, 1.2) on the clamping tables (10.1, 10.2) and, upon being traversed out from the clamping tables (10.1, 10.2), produces a profile close to the position of the welded seam to be produced.

3. Method according to Claim 1 or Claim 2, characterized in that the feed unit (F) dresses the region of the welded seam upon being traversed out from the clamping tables (10.1, 10.2).

4. Apparatus for carrying out the method according to Claim 1, with a welding station (S) served by a feed unit (F) for the workpieces (1.1, 1.2) and a discharge conveyor unit (5), characterized in that the feed unit (F) has a gripping manipulator (7) with a slit (8) in which the workpieces (1.1, 1.2) are held, and is constructed so as to eject welded workpieces from the welding station (S) into the discharge conveyor unit (5).

5. Apparatus according to Claim 4, characterized in that the manipulator (7) is traversable into the welding station (S).

6. Apparatus according to Claim 4 or Claim 5, characterized in that the manipulator (7) works in conjunction with at least one profiling roller (12).

7. Apparatus according to any one of Claims 4 to 6, characterized in that the manipulator (7) has dressing rollers.

8. Apparatus according to any one of Claims 4 to 7, characterized in that receiving rollers (9) for the workpieces (1.1, 1.2) are provided on both sides of the slit (8).

9. Apparatus according to Claim 8, characterized in that an additional welding station (S₁, S₂) with a welding unit (3.1, 3.2) and an additional feed unit (F₁, F₂) is connected on the other side of the discharge conveyor unit (5).

10. Apparatus according to Claim 9, characterized in that an additional welding station with a feed unit is provided parallel with the welding station (S) and feed unit (F).

## Revendications

1. Procédé d'assemblage de deux pièces (1.1, 1.2) par soudage, les pièces (1.1, 1.2) étant amenées sur des tables de bridage (10.1, 10.2) par un dispositif d'amenée (F) et étant assemblées entre elles par un cordon de soudure,
caractérisé
en ce que les pièces (1.1, 1.2) sont positionnées dans le dispositif d'amenée (F), le dispositif d'amenée (F) entre ensuite entre les tables de bridage (10.1, 10.2) et dépose les pièces (1.1, 1.2) et éjecte simultanément, lors de son entrée, les pièces (1.1, 1.2) assemblées par le cordon de soudure du cycle précédent.

2. Procédé selon la revendication 1, caractérisé en ce que le dispositif d'amenée (F) arrive entre les tables de bridage (10.1, 10.2) avec des pièces (1.1, 1.2) maintenues en serrage, il dépose les pièces (1.1, 1.2) sur les tables de bridage (10.1, 10.2) et produit un profilage lors de sa sortie des tables de bridage (10.1, 10.2), à proximité du cordon de soudure à produire.

3. Procédé selon la revendication 1 ou 2, caractérisé en ce que le dispositif d'amenée (F) lisse la zone du cordon de soudure à sa sortie des tables de bridage (10.1, 10.2).

4. Dispositif pour la mise en oeuvre du procédé selon la revendication 1, comportant un dispositif d'amenée (F) pour les pièces (1.1, 1.2) dans un poste de soudage (S) ainsi qu'un dispositif d'évacuation (5) associé, caractérisé en ce que le dispositif d'amenée (F) comporte une pince de serrage (7) avec une fente (8) dans laquelle sont fixées les pièces (1.1, 1.2), et qui est conçu pour éjecter des pièces du poste de soudage (S) dans le dispositif d'évacuation.

5. Dispositif selon la revendication 4, caractérisé en ce que la pince de serrage (7) est déplaçable dans le poste de soudage (S).

6. Dispositif selon la revendication 4 ou 5, caractérisé en ce qu'au moins un rouleau de profilage (12) est associé à la pince de serrage (7).

7. Dispositif selon l'une des revendications 4 à 6, caractérisé en ce que la pince de serrage (7) comporte des rouleaux de lissage.

8. Dispositif selon l'une des revendications 4 à 7, caractérisé en ce que des rouleaux de dépose (9) pour les pièces (1.1, 1.2) sont prévus de part et d'autre de la fente (8).

9. Dispositif selon la revendication 8, caractérisé en ce qu'au-delà du dispositif d'évacuation (5) se raccordent un autre poste de soudage (S₁, S₂) avec un dispositif de soudage (3.1, 3.2) ainsi qu'un autre dispositif d'amenée (F₁, F₂).

10. Dispositif selon la revendication 9, caractérisé en ce que parallèlement au poste de soudage (S) et au dispositif d'amenée (F) est prévu un autre poste de soudage avec dispositif d'amenée.
